Europäisches Patentamt

European Patent Office

Office européen des brevets

(11) Numéro de publication : **0 486 335 A1**

## (12) DEMANDE DE BREVET EUROPEEN

(21) Numéro de dépôt : **91402709.9**

(22) Date de dépôt : **10.10.91**

(51) Int. Cl.⁵ : **C12C 7/16, B01D 25/12**

(30) Priorité : **11.10.90 FR 9012565**

(43) Date de publication de la demande :
**20.05.92 Bulletin 92/21**

(84) Etats contractants désignés :
**BE DE ES FR GB**

(71) Demandeur : **NORDON & CIE**
**78 Avenue du XXe Corps**
**F-54000 Nancy (FR)**

(72) Inventeur : **Dieux, Daniel**
**1 Rue du Tendon**
**F-54420 Pulnoy (FR)**

(74) Mandataire : **Picard, Jean-Claude Georges**
**Cabinet Plasseraud 84, rue d'Amsterdam**
**F-75009 Paris (FR)**

(54) **Filtre à maische.**

(57)   Le filtre est constitué d'un empilage de plateaux 2 chambrés des deux côtés et portant une
paroi filtrante 5, 6, 7. Deux plateaux accolés
ainsi par leurs plans de joint 3 forment entre eux
un espace commun pour la réception des maisches. Les fonds des plateaux sont inclinés pour
faciliter l'évacuation des drêches. Les conduites d'évacuation 15 du moût sont situées à la
partie inférieure des plateaux. Elles recueillent
le moût s'écoulant de part et d'autre d'une tôle
séparatrice 5, après avoir traversé les parois
filtrantes 6.

FIG.1.

EP 0 486 335 A1

La présente invention concerne un filtre à maische, du type filtre-presse, comportant un empilage d'éléments verticaux constituant entre eux des espaces délimités, sur leurs deux faces opposées, par des parois filtrantes, ces espaces étant reliés d'une part à des moyens d'alimentation en maische et d'autre part à des moyens d'évacuation de la drêche qui y subsiste après pressage, ce pressage s'effectuant dans une direction générale perpendiculaire auxdites parois filtrantes, ce filtre comportant en outre des moyens d'évacuation de la phase liquide (moût) ayant traversé lesdites parois.

Avant de préciser les buts de l'invention, il y a lieu de rappeler les considérations générales suivantes, concernant la brasserie.

Lors du processus de production de la bière, le brassage conduit à une solution appelée "maische", constituée d'une part d'un jus sucré appelé "moût", destiné après fermentation à produire la bière, et d'autre part d'éléments insolubles comme les éléments cellulosiques des enveloppes, les protéines coagulées et les matières grasses. La filtration de la maische consiste en une séparation des phases solide-liquide, au cours de laquelle le jus sucré est séparé d'un résidu solide appelé "drêche". Cette filtration s'effectue dans un filtre qui peut être du type général rappelé au début.

Cette phase de séparation est suivie d'une phase d'extraction ayant pour but de récupérer le maximum d'extrait soluble de la maische et d'épuiser les drêches. Cette extraction se fait par lavage des drêches à l'eau avec dans certains cas un essorage.

Le moût sucré doit être le plus limpide possible et débarrassé du maximum de particules insolubles, lesquelles sont nuisibles aux qualités du produit final. Par ailleurs, ce moût doit atteindre une concentration optimum de matières solubles destinées à être fermentées. L'épuisement des drêches doit donc pouvoir s'effectuer avec le minimum d'eau. Il y a lieu de noter en outre que sur les parois filtrantes précitées se forment des gâteaux de filtration constitués par la drêche elle-même ; il est donc essentiel que ces gâteaux de filtration présentent une perte de charge régulière, de façon à éviter la formation de canaux préférentiels au cours de l'épuisement, ce qui conduirait à un lavage imparfait, donc à une rétention de jus sucré dans la drêche aux emplacements présentant des pertes de charge plus élevées. Il est également essentiel que tout au long des opérations, l'organisation de ces gâteaux soit préservée pour ne pas dégrader leurs performances de filtration. Traditionnellement, la filtration de la maische s'opère principalement par deux méthodes différentes :

    – l'une met en oeuvre une cuve-filtre, constituée d'un tamis horizontal sur lequel la drêche est déposée en couche épaisse (300 à 400 mm) ;

    – l'autre met en oeuvre un filtre à maische, ou filtre-presse, du type général décrit au début.

Dans ces filtres, le pourtour des espaces successifs précités de l'empilage est délimité par un cadre dans lequel la maische est amenée, et la drêche est retenue, sur des épaisseurs allant généralement de 60 à 80 mm ; les parois filtrantes (toile textile) sont portées de façon amovible, de chaque côté de chaque cadre, par des plateaux verticaux distincts des cadres et qui peuvent en être écartés.

Avec de tels filtres à maische, à savoir ceux que l'invention concerne, la drêche est déchargée, en fin d'opération de filtration et de lavage, en ouvrant le filtre par une opération automatique dite de "débâtissage", qui déplace les cadres et les plateaux individuellement à l'aide de chariots latéraux à cliquets.

Les toiles qui, à l'origine, étaient en coton et qui depuis une vingtaine d'années sont en polypropylène, plus résistant, sont nettoyées pendant cette opération, soit manuellement, soit automatiquement par un portique de nettoyage indépendant qui se déplace en synchronisation avec le système de débâtissage des cadres et plateaux. La synchronisation des dispositifs indépendants de débâtissage et de nettoyage étant obtenue par des moyens électriques et/ou optiques, les toiles en textile, malgré une régénération périodique avec des solutions de soude, ont non seulement une durée de vie limitée, devant être changées tous les 1000 ou 1500 cycles, mais de plus elles ne permettent pas d'opérer à des températures dépassant 80°C, alors que les exigences de plus en plus grandes au point de vue de l'hygiène pour les équipements en industrie alimentaire, demandent de pouvoir procéder à des températures nettement plus élevées pour obtenir une stérilisation correcte.

Par ailleurs, la filtrabilité (et donc la facilité avec laquelle s'opère la séparation solide-liquide, et ensuite le lavage) serait fortement améliorée à des températures supérieures à 80°C (par exemple 90°C) et ce pour deux raisons liées à l'augmentation de la température, l'une étant la baisse de la viscosité, l'autre étant l'augmentation de la coagulation des protéines, améliorant la filtrabilité et, par la même occasion, la rupture physico-chimique de certains colloïdes responsables en partie des difficultés de filtrabilité.

Il y a lieu de noter en outre que l'agencement connu à cadres et plateaux séparés rend le montage et le démontage des toiles en textile assez long, étant donné le grand nombre d'éléments à déplacer, ce qui est d'autant plus gênant qu'il faut les démonter fréquemment.

Le but de la présente invention est d'éliminer ces inconvénients de la technique antérieure en simplifiant l'empilage des éléments, de façon à rendre plus faciles et plus rapides les opérations de débâtissage et de nettoyage des parois filtrantes.

Il est également de permettre le nettoyage de ces parois à des températures notablement plus élevées

que par le passé, ceci pour améliorer la filtrabilité ainsi que l'hygiène.

A cet effet, un filtre à maische du type général défini au début sera, conformément à la présente invention, essentiellement caractérisé d'une part en ce que lesdits éléments verticaux sont constitués par des plateaux chambrés des deux côtés, propres à constituer les espaces précités lorsqu'ils sont accolés selon un plan de joint, ces plateaux portant des parois filtrantes, d'autre part en ce que ces parois sont constituées de toiles résistant à la température, incorporées chacune au plateau correspondant, et également en ce que lesdits moyens d'alimentation desdits espaces en maische débouchent à l'une des extrémités (haute ou basse) desdits espaces.

Ces parois filtrantes peuvent être fixées à demeure, ou au contraire être démontables. Quant auxdites toiles, elles peuvent être métalliques et réfractaires, par exemple en acier inoxydable, ou en matière synthétique, par exemple en polypropylène haute température.

On comprend que l'on divise ainsi pratiquement par 2 le nombre d'éléments à empiler (pour un nombre donné d'espaces de réception de la maische), puisque l'on élimine tous les cadres : selon l'invention, la fonction de chaque cadre de la technique antérieure se trouve remplie par deux plateaux accolés, dont les deux chambres qui se font face forment ensemble l'espace en question.

Il en résulte essentiellement que le débâtissage effectué à la fin de chaque cycle pourra être beaucoup plus rapide qu'avec les filtres classiques à cadres ; on pourra ainsi affecter un minimum de temps aux phases du processus qui ne concernent pas directement la filtration ou le lavage des drêches.

En outre, il sera beaucoup plus facile de décolmater les toiles métalliques après chaque cycle, à l'aide d'un dispositif automatique et avec la fiabilité souhaitable. Ces toiles métalliques, par exemple en acier inoxydable, de même que les toiles en matière synthétique haute température, ne s'altèreront que très peu à l'usage, et présenteront une durée de vie beaucoup plus longue que les toiles textiles actuellement utilisées, de sorte qu'elles n'ont plus besoin d'être démontables, si ce n'est en même temps que les plateaux sur lesquels elles sont fixées, à l'occasion de réparations éventuelles.

Le décolmatage de ces toiles métalliques ou synthétiques pourra être aussi fréquent que nécessaire pour éviter les formations de dépôts ou de salissures. On pourra maintenant utiliser des moyens qui n'étaient pas envisageables avec les toiles habituelles en polypropylène, comme des jets d'eau chaude sous pression ou des jets de vapeur d'eau ou de produits chimiques. La nettoyabilité et la stérilisabilité de l'ensemble du filtre, de même que l'homogénéité du décolmatage des toiles métalliques ou synthétiques, pourront aussi être considérablement accrues, du fait que ces jets d'eau ou autres pourront être à beaucoup plus haute température qu'auparavant (>90°C), sans risque mécanique pour la toile de filtration. Dans le présent domaine d'industrie alimentaire, il s'agit là d'un avantage déterminant.

Par ailleurs, le fait que les moyens d'alimentation en maische débouchent à la partie supérieure ou à la partie inférieure desdits espaces permettra de constituer un gâteau de filtration parfaitement homogène sur toute sa surface, et par suite permettra d'obtenir un lavage à excellent rendement. Ces résultats seraient impossibles à obtenir avec une alimentation centrale de la maische, comme cela se pratique dans certaines installations connues.

Il y a lieu de noter par ailleurs que l'utilisation de plateaux chambrés permettra d'utiliser un système de nettoyage et de stérilisation automatique des filtres, et de simplifier la synchronisation du débâtissage et du décolmatage, nécessaire à la rapidité de ces opérations.

Avantageusement on peut encore prévoir que les fonds desdits plateaux chambrés sont inclinés vers le bas, à partir du bas de la paroi filtrante correspondante, la partie inférieure de l'espace compris entre deux plateaux voisins ayant ainsi une forme de trémie.

La vidange des espaces ou chambres entre plateaux sera ainsi simplifiée ; l'ouverture des plateaux suffira en effet à vider la drêche, ce qui ne pouvait être obtenu aussi simplement avec les cadres de la technique connue, où le fond du cadre freine la descente de la drêche, même sur l'arête supérieure du V retourné.

Les différentes dispositions de l'invention seront d'ailleurs mieux vues à la lecture de la description qui suit d'un filtre à maische conforme à l'invention, avec ses variantes, description faite avec référence aux figures du dessin annexé dans lequel :

– les figures 1, 2, 3a et 3b sont des vues schématiques simplifiées, en perspective, d'un plateau chambré des deux côtés, pour filtre à maische conforme à l'invention, deux tels plateaux étant destinés à être accolés (figure 7) pour constituer entre eux l'espace propre à recevoir la maische ;

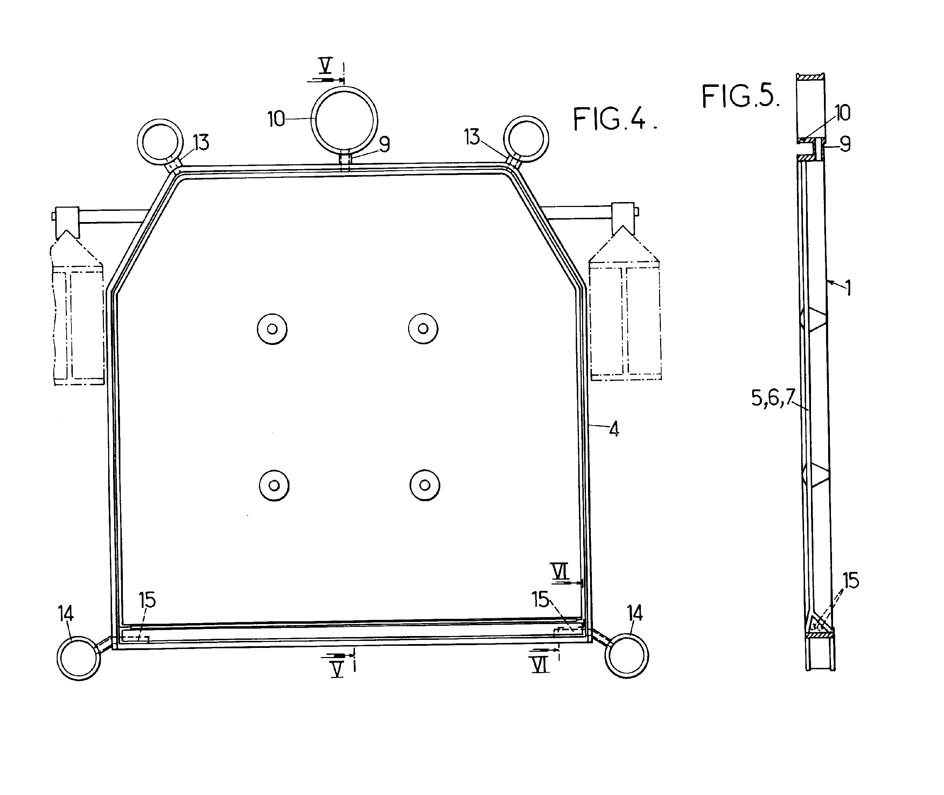

– la figure 4 est une vue en élévation de face d'un plateau ;

– la figure 5 est une vue en coupe selon la ligne V-V de la figure 4 ;

– la figure 6 est une vue en coupe transversale partielle de la partie inférieure des plateaux par la ligne VI-VI de la figure 4 ;

– la figure 7 est une vue schématique en élévation montrant deux plateaux accolés ; et

– la figure 8 est la vue correspondante en plan.

Sur les différentes figures on a utilisé généralement les mêmes références pour désigner les mêmes parties ou éléments du filtre à maische.

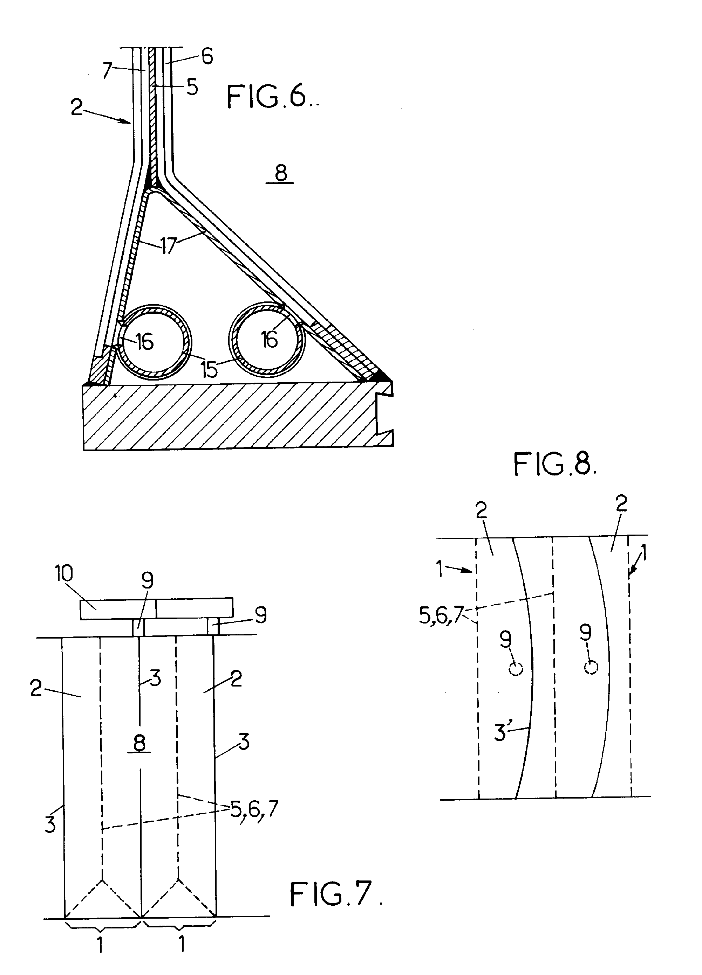

Ce que l'on a appelé au début les "éléments verticaux" a été référencé 1, chacun de ces éléments étant constitué sous la forme d'un plateau chambré 2, deux tels plateaux étant propres à être accolés l'un à l'autre par un plan de joint 3, comme cela est mieux visible à la figure 7. Ces plateaux 2 sont constitués d'un cadre 4 en acier inoxydable cintré et soudé (ou moulé), maintenu en forme par une tôle intérieure 5. Cette tôle 5 sert également à supporter le dispositif de maintien de la toile métallique de filtration 6, ce dispositif de maintien étant constitué d'un grillage à mailles carrées 7. Ce grillage sert donc à la fois à supporter la toile métallique 6 (en acier inoxydable), servant de paroi filtrante, et à permettre l'écoulement du moût vers le bas ; il pourrait d'ailleurs être remplacé par une tôle larmée ou à cannelures verticales ayant exactement le même rôle.

Lorsque deux plateaux ainsi constitués sont accolés (voir figure 7), ils ménagent entre eux des espaces ou chambres 8 pour la réception de la maische, espaces qui sont limités, en épaisseur, par les parois filtrantes correspondantes 6.

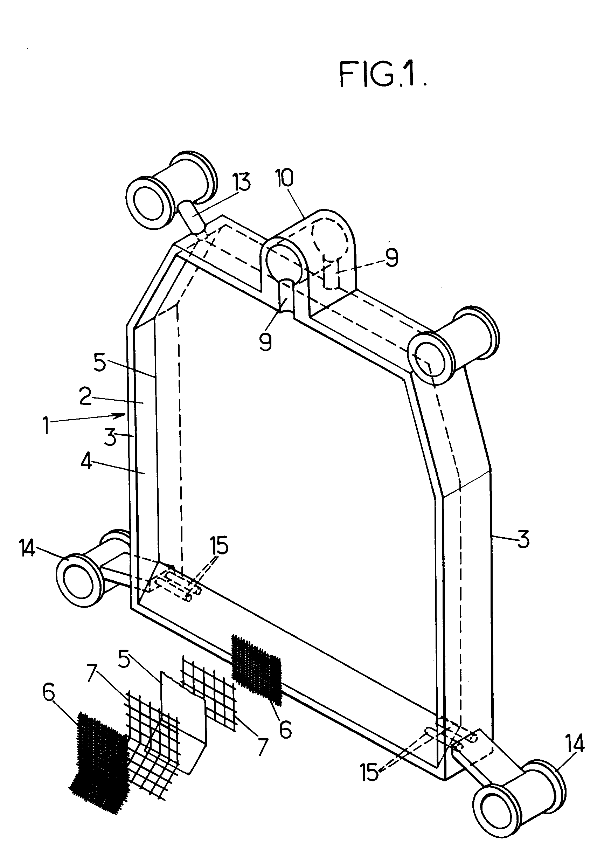

Dans le mode de réalisation de la figure 1, la tôle 5 est un plan de symétrie de l'élément 1. Etant donné que la maische, pour une répartition optimale, doit arriver au milieu des espaces 8 ménagés entre deux plateaux 2 contigus, (de part et d'autre de la tôle centrale 5) elle doit arriver dans ce cas par des conduites 9 (branchées sur un collecteur 10) qui sont coupées par les plans de joint respectifs 3. Pour éviter les problèmes d'étanchéité pouvant résulter de cette disposition, on peut envisager plusieurs variantes.

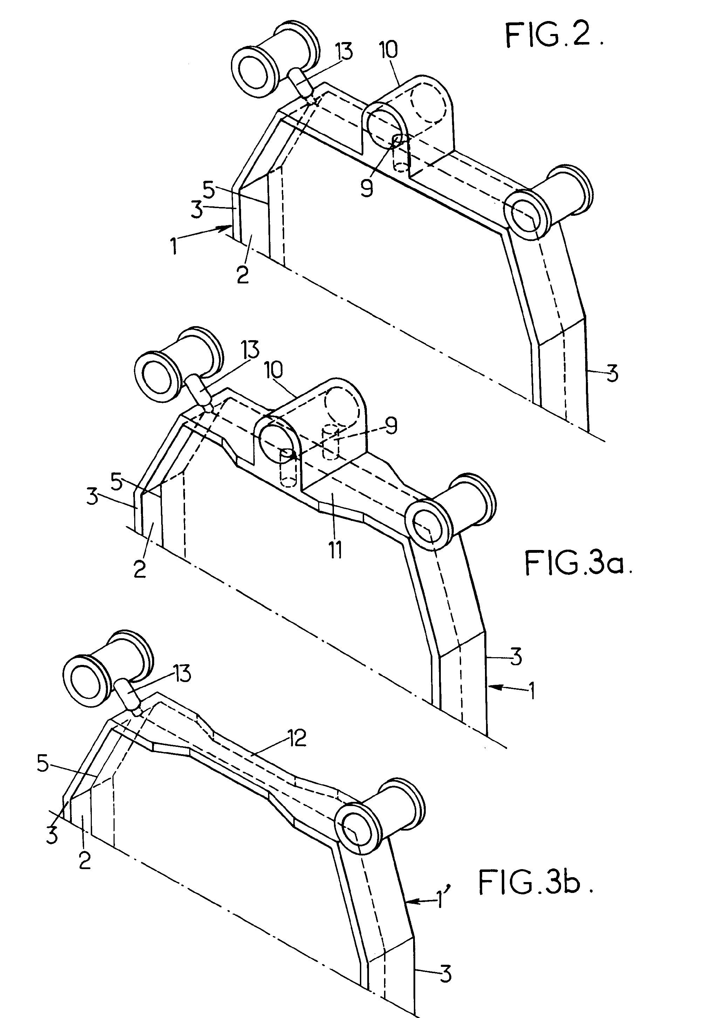

Dans le cas de la figure 2, le plan de la tôle séparatrice 5 est décalé d'un côté (toujours le même pour tous les plateaux du filtre) par rapport au plan médian du cadre 4. Les conduites d'amenée 9 peuvent ainsi déboucher en dehors du plan de joint 3, c'est-à-dire totalement en dedans de la partie supérieure du cadre 4, tout en débouchant encore dans le plan médian des espaces 8. En effet, pour un plateau 2 donné, l'espace entre la tôle 5 et l'un des plans de joint 3 est plus grand d'un côté que de l'autre, et c'est bien entendu de ce côté plus grand que l'on fait déboucher la conduite d'alimentation 9.

Les figures 3a et 3b (à considérer ensemble) montrent une autre solution, permettant d'éviter que les conduites d'alimentation en maische 9 ne soient coupées par les plans de joint 3. Cette variante évite par ailleurs les "demi-espaces" dissymétriques de la figure 2, la tôle séparatrice 5 restant dans ce cas dans le plan de symétrie de l'élément. Par contre, on utilise des cadres 4 dont les parties supérieures sont alternativement, d'un élément à l'élément voisin, de deux formes différentes, complémentaires l'une de l'autre. Ainsi, on empilera alternativement, pour constituer l'ensemble du filtre, les éléments 1 de la figure 3a, comportant une partie supérieure 11 de cadre élargie, percée de deux conduites d'arrivée 9, et les éléments 1' de la figure 3b, comportant une partie supérieure 12 de cadre rétrécie (complémentaire de la précédente), non percée. On conçoit que cette solution également permet de sortir les conduites 9 des plans de joint, tout en les faisant déboucher au centre des espaces de filtration 8.

Une autre solution encore (variante de la précédente) a été représentée à la figure 8. Elle consiste, dans la partie supérieure des cadres 4, à donner au plan de joint 3' une forme arquée. On voit clairement sur cette figure que les conduites d'amenée 9 peuvent encore déboucher exactement dans le plan médian de l'espace 8 correspondant, tout en évitant le plan de joint supérieur 3'. Dans ce cas, les plateaux pourraient être tous identiques.

Sur les figures 1 à 3b ; on a encore référencé en 13 des évents permettant l'évacuation de l'air lors du remplissage des espaces 8 avec la maische, et en 14 les deux collecteurs d'évacuation du moût et de l'eau de lavage (les conduits 13 pourraient éventuellement servir à collecter le moût). Chacun de ces collecteurs est alimenté par deux conduits 15 s'étendant aux extrémités de l'élément considéré, à l'intérieur d'une embase triangulaire de cet élément, comme ceci est mieux visible sur la figure 6. Ces tubes 15, pourvus de lumières d'arrivée 16, peuvent par exemple être soudés aux parois inclinées 17 qui prolongent en deux branches la tôle centrale 5 et qui constituent le fond des espaces 8. Les lumières 16 débouchent à travers les parois 17 aussi bas que possible, de sorte que l'on ne perd qu'un minimum de la quantité de moût qui s'écoule le long de la grille 7, entre la toile métallique 6 et la tôle séparatrice centrale 5. De même, cette disposition, qui permet aux grilles 7 de recouvrir aussi les parois inclinées 17, permettra de laver les drêches jusque dans leur partie la plus basse, ce qui permettra d'augmenter le rendement d'extraction et de diminuer la quantité d'eau de lavage nécessaire.

Il est à noter aussi que le principe général de filtre qui vient d'être décrit est également compatible avec une arrivée de la maische par le bas des espaces 8, ce qui assurerait encore une bonne répartition de la maische sur les parois filtrantes, et une répartition uniforme de la perte de charge tout en contrecarrant une présédimentation de la maische.

Il y a lieu de noter enfin qu'en disposant des vannes "tout ou rien" sur les sorties d'évacuation des plateaux, il sera possible de procéder à un nettoyage chimique, par exemple à l'aide d'une solution de soude, avec une circulation forcée successivement dans tous les plateaux.

Si au lieu d'une toile métallique on utilise un plateau chambré en polypropylène dopé, le grillage est supprimé, des rainures étant usinées dans le plateau.

**Revendications**

1. Filtre à maische, du type filtre-presse, comportant un empilage d'éléments verticaux constituant entre eux des espaces délimités, sur leurs deux faces opposées, par des parois filtrantes, ces espaces étant reliés d'une part à des moyens d'alimentation en maische et d'autre part à des moyens d'évacuation de la drêche qui y subsiste après pressage, ce pressage s'effectuant dans une direction générale perpendiculaire auxdites parois filtrantes, ce filtre comportant en outre des moyens d'évacuation de la phase liquide (moût) ayant traversé lesdites parois, caractérisé d'une part en ce que lesdits éléments verticaux (1) sont constitués par des plateaux (2), chambrés des deux côtés, propres à constituer les espaces (8) précités lorsqu'ils sont accolés selon un plan de joint (3), ces plateaux (2) portant des parois filtrantes (6), d'autre part en ce que ces parois (6) sont constituées de toiles résistant à la température, incorporées chacune au plateau correspondant, et également en ce que lesdits moyens d'alimentation (9) desdits espaces (8) en maische débouchent à l'une des extrémités (haute ou basse) desdits espaces.

2. Filtre selon la revendication 1, caractérisé en ce que lesdites toiles sont métalliques (6), de préférence en acier inoxydable.

3. Filtre selon la revendication 1, caractérisé en ce que lesdites toiles sont en une matière synthétique haute température, comme le polypropylène dopé.

4. Filtre selon la revendication 1 ou 2 ou 3, caractérisé en ce qu'il est associé à un système propre à assurer des opérations de débâtissage, de nettoyage et de décolmatage automatiques et synchronisées desdites parois filtrantes (6).

5. Filtre selon l'une quelconque des revendications précédentes, caractérisé en ce que les fonds (17) desdits plateaux chambrés (2) sont inclinés vers le bas, à partir du bas de la paroi filtrante (6) correspondante, la partie inférieure de l'espace (8) compris entre deux plateaux (2) voisins ayant ainsi une forme de trémie.

6. Filtre selon l'une quelconque des revendications précédentes, caractérisé en ce que lesdits plateaux (2) sont constitués de cadres (4) rigidifiés par une tôle intérieure (5) servant à supporter la paroi filtrante (6) correspondante par l'intermédiaire d'un dispositif de maintien (7) permettant l'écoulement du moût vers le bas.

7. Filtre selon l'une quelconque des revendications précédentes, caractérisé en ce que lesdits plateaux (2) sont réalisés par usinage de polypropylène dopé.

8. Filtre selon la revendication 6, caractérisé en ce que le plan de ladite tôle intérieure (5) est décalé d'un côté par rapport au plan médian du cadre correspondant (4), ce qui permet de faire déboucher chaque conduite (9) d'arrivée de maische desdits moyens d'alimentation au milieu de l'espace (8) formé avec le plateau (2) voisin, mais en dehors de leur plan de joint (3).

9. Filtre selon la revendication 6, caractérisé en ce que ladite tôle intérieure (5) constitue un plan de symétrie de l'élément (1) correspondant, et en ce que ledit empilage est constitué alternativement de plateaux (2) dont la partie supérieure (11) du cadre (4) est élargie et est traversée par deux conduites (9) d'arrivée de maische, et de plateaux (2) dont la partie supérieure (12) est rétrécie et de forme complémentaire de la précédente.

10. Filtre selon la revendication 6, caractérisé en ce que dans la partie supérieure des plateaux (2) le plan de joint (3') possède une forme arquée.

11. Filtre selon l'une quelconque des revendications 6 à 10, caractérisé en ce que la tôle intérieure (5) de chaque plateau (2) est prolongée vers le bas selon deux branches inclinées (17) destinées à constituer le fond desdits espaces (8), l'espace ménagé sous ces branches recevant les conduites (15) d'évacuation du moût et de l'eau de lavage des drêches, ces conduites étant reliées à un collecteur commun (14) à chaque extrémité desdits plateaux.

# FIG.1.

FIG.2.

FIG.3a.

FIG.3b.

FIG.4.

FIG.5.

FIG.6..

FIG.8.

FIG.7.

**Office européen des brevets**

**RAPPORT DE RECHERCHE EUROPEENNE**

Numero de la demande

EP    91 40 2709

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-1 139 758 (USINES MEURA)<br>--- | | C12C7/16<br>B01D25/12 |
| A | AU-A-550 823 (CASTLEMAINE TOOHEYS LIMITED)<br>--- | | |
| A | FR-A-2 507 496 (SA DUMONT ENGINEERING ET COMPAGNIE)<br>--- | | |
| A | EP-A-0 265 152 (THE BREWING RESEARCH FOUNDATION)<br>* revendications; tableau 5 * | 1-3,7 | |

**DOMAINES TECHNIQUES RECHERCHES (Int. Cl.5)**

C12C
B01D

Le présent rapport a été établi pour toutes les revendications

| Lieu de la recherche | Date d'achèvement de la recherche | Examinateur |
|---|---|---|
| LA HAYE | 06 JANVIER 1992 | BEVAN S.R. |